# EUROPEAN PATENT SPECIFICATION

(11) **EP 2 830 029 B1**
(45) Date of publication and mention of the grant of the patent: **12.07.2017**
(21) Application number: 14177748.2
(22) Date of filing: 21.07.2014
(51) Int. Cl.: G06K 9/42, G06K 9/62, G08G 1/0962, G08G 1/16, G01C 21/36, G06K 9/00

(54) **A method for monitoring a vehicle driving state and a vehicle navigation device for implementing the method**
Verfahren zur Überwachung eines Fahrzeugfahrzustands und Fahrzeugnavigationsvorrichtung zur Implementierung des Verfahrens
Procédé de surveillance d'un état de conduite de véhicule et dispositif de navigation de véhicule pour la mise en oeuvre du procédé

(30) Priority: 22.07.2013 CN 201310308241
(43) Date of publication of application: 28.01.2015
(73) Proprietor: ROBERT BOSCH GMBH, 70442 Stuttgart (DE)
(72) Inventor: An, Jian, 215021 Suzhou, Jiangsu (CN)
(74) Representative: Isarpatent

(56) References cited:
- DE-A1-102009 036 196
- US-A1- 2009 041 304
- US-A1- 2009 058 622
- US-A1- 2012 216 208
- US-A1- 2012 245 832
- US-A1- 2012 268 600
- US-A1- 2013 010 113
- US-A1- 2013 101 174

## Description

The present invention relates to vehicle navigation technology, in particular, to a method for monitoring a vehicle driving state and a vehicle navigation device for achieving the method.

### BACKGROUND

For road traffic, both the number and severity of traffic accidents will rise with an increase of vehicle speed. Experiences in various countries demonstrate that with each increase of 1 kilometer/hour of average vehicle speed, the damage of traffic accidents will increase by 3%, and deadly traffic accidents will increase by 4%-5%. Overspeed of driving has already become a main reason of the occurrence of traffic accidents in each country of the world. Therefore, the control over vehicle speed is very important for improving safety in traffic road and reducing the occurrence of traffic accidents.

Currently, each country has different regulations and measurements for limiting road speed according to actual circumstances thereof. Moreover, even in the same country, the limited speed value for road varies dynamically for different hours and different regions. For example, a reasonable safety limited value (also referred to as variable speed control) is often set for a highway based on such conditions as road condition, traffic condition and weather condition, etc. In addition, when setting a safety limited speed, such factors as vehicle type and lane are also taken into consideration.

The limited speed information is typically displayed on an information board disposed on a road or aside of a road so that the driver can be notified in time. However, due to such factors as non-concentration of attention, retarded reaction and poor sight, these restriction information might be ignored or misunderstood, thus placing the vehicle into an unsafe driving state. For example, the vehicle might travel in a fast lane at a lower speed or in a slow lane at a faster speed, might travel in a lane for which the vehicle is prohibited, and might exceed a limited speed temporarily set due to various emergencies, etc.

The driving trace for a vehicle can be detected by means of satellite locating signals such as GPS, thus enabling a real time monitoring for vehicle driving state. However, in order to support this method, a vast database storing geographic and traffic information is required, making this method highly dependent on the accuracy and timely update of the data.

US 2013/0101174 A1 describes a method for combining a road sign recognition system and a lane detection system of a motor vehicle. The road sign recognition system generates road sign information from sensor data of a camera-based or video-based sensor system. The lane detection system generates lane course information from said sensor data.

In view of the above, a method that can accurately and reliably monitor vehicle driving state in an automatic manner is required, in which the driver can be immediately notified of an unsafe driving state of a vehicle once it is monitored by the method, thus eliminating safety hazard.

### SUMMARY OF THE INVENTION

The object of the invention is to provide a method according to claim 1 of the appended claims for monitoring a vehicle driving state which presents such advantages as being accurate, reliable and timely.

In the above embodiment, the monitoring of vehicle driving state is realized by using images which are taken locally. Therefore, both the accuracy and reliability are improved as compared to the prior art.

The driving-restriction information is a defined relationship among lane, vehicle type and driving speed restriction.

In the above method, the first image and the second image are obtained by a first camera and a second camera, wherein the first camera is disposed at a middle position of the head of the vehicle, and the second camera is disposed at a middle position of an upper portion of the front windshield of the vehicle.

In the above method, the step of obtaining a second image having a driving-restriction board comprises the steps of:
activating the second camera when it is determined that the vehicle is spaced apart from the driving-restriction board by a first set distance;
obtaining the second image when it is determined that the vehicle is spaced apart from the driving-restriction board by a second set distance; and
deactivating the second camera when the acquisition of the second image is completed, wherein the first set distance is larger than the second set distance, and the distance between the vehicle and the driving-restriction board is determined by means of a navigation device.

Since the recognition of the driving-restriction information is activated only when the vehicle is close to the board, the resource consumed by computing devices can be greatly reduced.

Preferably, in the above method, the driving-restriction information is recognized in the following manner:
if it is determined that it is currently in a foggy weather condition according to the concentration degree of pixel gray values of the second image, performing an enhanced process to the second image;
extracting a region corresponding to the driving-restriction board from the second image which has been subject to the enhanced process; and
recognizing the driving-restriction information from the region corresponding to the driving-restriction board.

Preferably, in the above method, the enhanced process comprises the steps of: dividing a value range of the pixel gray values of the second image into a plurality of gray threshold intervals, each gray threshold interval corresponding to a foggy weather category;
determining the foggy weather category according to the distribution of the pixel gray values of the second image in the plurality of gray threshold intervals; and
employing a corresponding enhanced processing algorithm for processing second images that belong to different foggy weather categories.

Since different enhanced processing algorithms are used to process the second images of different foggy weather categories, a better pertinency is obtained, thus significantly improving the accuracy in recognizing driving-restriction information.

Further, it the above method, the foggy weather categories comprise three categories of light fog, dense fog and thick fog, wherein for the light fog category, the Frankle-McCann algorithm is used for enhanced process; for the dense fog category, the contrast enhanced algorithm is used for enhanced process; and for the thick fog category, the enhanced process is performed in the following manner: firstly, a demeaning and unit variance operation is performed on the second image, then a lateral column vector is demeaned and normalized into a unit variance, and lastly, a denoising operation is performed using sparse coding.

Another object of the invention is to provide a vehicle navigation device according to claim 3 of the appended claims which monitors vehicle driving state accurately, reliably and timely.

In the above vehicle navigation device, the image acquisition device comprises:
a first camera configured for obtaining the first image, which is disposed at a middle position of the head of the vehicle; and
a second camera configured for obtaining the second image, which is disposed at a middle position of an upper portion of the front windshield of the vehicle.

Preferably, in the above vehicle navigation device, a wide angle range and a horizontal shooting angle of the first camera is about 140 degrees and -10 degrees respectively, and a wide angle range and a horizontal shooting angle of the second camera is about 140 degrees and +20 degrees respectively.

### BRIEF DESCRIPTION OF THE DRAWINGS

The above and/or other aspects and advantages of the invention will become more clear and more easily understood from the following description of many aspects with reference to the accompanying drawings, in which identical or similar elements are denoted by identical reference signs, the accompanying drawings comprising:
Fig. 1 , which is a block view showing the structure of a vehicle navigation device according to an embodiment of the invention;
Fig. 2 , which is an overall flowchart of a method for monitoring a vehicle driving state according to an embodiment of the invention; and
Fig. 3 is a flowchart showing an image enhanced process routine for the method shown in Fig. 2.

### List of reference signs

- 10: vehicle navigation device
- 110: unit for receiving locating signal
- 120: display
- 130: storage
- 140: image unit
- 141: image acquisition device
- 141A: first camera
- 141B: second camera
- 142: image processing device
- 150: processing unit

### DETAILED DESCRIPTION OF THE INVENTION

The invention will be described more fully hereinafter with reference to the accompanying drawings which illustrate exemplary embodiments of the invention. However, the invention can be embodied in many different ways and should not be considered as being merely limited to the embodiments provided herein. The above embodiments provided herein are intended to make the disclosure of the application thorough and complete so as to enable a more complete and accurate understanding of the scope of protection of the invention.

Such expressions as "including" and "comprising" are used to indicate that in addition to the elements and steps that have been directly and definitely expressed in the Description and claims, the technical solutions of the invention do not exclude other cases involving other elements and steps that are not mentioned directly or definitely.

Such expressions as "first" and "second" are not used to identify the order of elements in terms of time, space, dimension, etc.; rather, they are used merely for distinguishing elements from each other.

The embodiments of the invention will be described in detail with reference to the accompanying drawings.

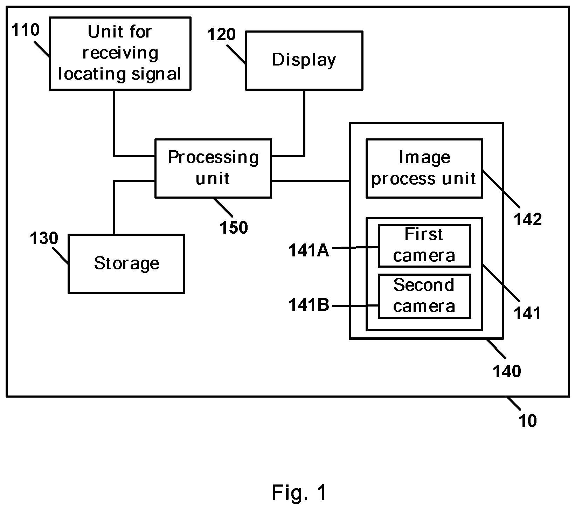

Fig. 1 is a block view showing the structure of a vehicle navigation device according to an embodiment of the invention.

As shown in Fig. 1, the vehicle navigation device 10 comprises a unit 110 for receiving locating signal, a display 120, a storage 130, an image unit 140 and a processing unit 150 coupled to the above units.

In this embodiment, the unit 110 for receiving locating signal receives a satellite signal from a satellite positioning system such as Global Positioning System (GPS) and Beidou satellite navigation system. Navigation data is stored in the storage 130 to be used by the processing unit 150. The processing unit 150 determines information on current location of the vehicle according to the received satellite signal and generates navigation information in combination with the navigation data. The generated navigation information is displayed on the display 120 so as to be used by users.

In addition to the above navigation data, the storage 130 stores a control program and other data (e.g., vehicle model number) for achieving the navigation function and a vehicle driving state monitoring function to be described below.

With reference to Fig. 1, the image unit 140 comprises an image acquisition device 141 and an image processing device 142.

In this embodiment, the image acquisition device 141 comprises a first camera 141A and a second camera 141B which are used for obtaining a first image for a scene in front of a vehicle and a second image having one or more driving-restriction boards respectively. In order to obtain a clear mage for a scene in front of the vehicle, the first camera 141A is preferably provided at a middle position of the head of the vehicle and has a wide angle range and a horizontal shooting angle of about 140 degrees and -10 degrees respectively. The first camera 141A can be in a continuous operational state. Optionally, the first camera 141A can be activated periodically so as to obtain a scene in front of the vehicle. In other embodiments, the image acquisition device 141 can comprise only one camera for obtaining a first image for a scene in front of a vehicle and a second image having one or more driving-restriction boards.

The driving-restriction boards are generally located on the road or aside of the road. The second camera 141B is preferably provided at a middle position of an upper portion of the front windshield of the vehicle and has a wide angle range and a horizontal shooting angle of about 140 degrees and +20 degrees respectively. The advantage resulting from providing the second camera 141B at the above location is that, on one hand, the image of the driving-restriction boards taken at this location is substantially consistent with that viewed from driver's eyes, and on the other hand, the sight of the driver will not be blocked.

In this embodiment, the second camera 141B preferably operates in an activated mode. Specifically, when the processing unit 150 determines that the vehicle is spaced apart from a driving-restriction board in front of the vehicle at a set distance (e.g., 100 meters) according to the locating signal and navigation data, it instructs the image unit 140 to enter the second camera 141B into an operational state. Then, when the processing unit 150 determines that the vehicle is spaced apart from the driving-restriction board at another set distance (e.g., 20 meters) according to the locating signal and navigation data, it instructs the image unit 140 to obtain a second image by the second camera 141B. When the acquisition of image is completed, the processing unit 150 instructs the image unit 140 to deactivate the second camera 141B or enter the second camera 141B into a standby state.

It is noted that the "driving-restriction" mentioned herein should not be construed in a narrow sense to be merely speed restriction; rather, it should be construed in a broad sense to be various restrictions on vehicle driving, including but not limited to: the restriction on the lane in which the vehicle travels in, an upper limit and a lower limit of driving speed, restriction on driving direction, restriction on vehicle type and one or more combinations of the above restrictions, etc. For example, in an exemplary embodiment, the following driving-restriction information may be applied to a segment of road having three one-way driving lanes:
(1) Only small passenger cars are allowed to travel in the outer lane at a driving speed between 100km/h-120km/h;
(2) Both passenger cars and trucks are allowed to travel in the middle lane at a driving speed between 80km/h-100km/h; and
(3) Both passenger cars and trucks are allowed to travel in the inner lane at a driving speed between 60km/h-80km/h.

The image processing device 142 is coupled to the image acquisition device 141. The image processing device 142 serves to extract relevant information from the acquired first image and second image so as to be used by the processing unit 150. For example, for the first image for a scene in front of the vehicle obtained by the first camera 141A, the image processing device 142 firstly recognizes a lane line from the image, and then determines which lane the vehicle currently travels in accordingly. Also for the second image having one or more driving-restriction boards obtained by the second camera 141B, the image processing device 142 firstly extracts this image from the board region, and then recognizes numbers, characters or signs included in the board region, thus obtaining driving-restriction information. Preferably, before performing the above process on the second image, the image processing device 142 firstly performs an enhanced process on the image so as to improve accuracy of recognition. The method concerning enhanced process will be further described below.

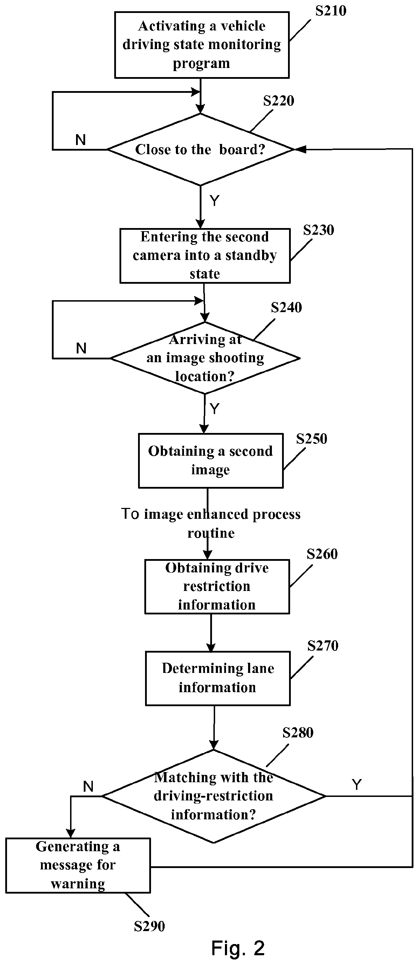

Fig. 2 is an overall flowchart of a method for monitoring a vehicle driving state according to an embodiment of the invention. For convenience of description, it is assumed herein that the method according to the embodiment is implemented by means of the vehicle navigation device shown in Fig. 1. However, it is noted that the principle of the invention is not limited to a navigation device of a particular type and structure.

As shown in Fig. 2, at step S210, the processing unit 150 of the vehicle navigation device 10, in response to a user's command to enter an operational mode of monitoring a vehicle driving state, activates a vehicle driving state monitoring program by instructing the image unit 140 to obtain an image for a scene in front of the vehicle by using the first camera 141 A.

Then, step S220 is executed, in which the processing unit 150 obtains information on current location of the vehicle according to the satellite signal received by the unit 110 for receiving locating signal, and determines whether the vehicle is close to the driving-restriction board in combination with the navigation data (e.g., by determining whether the vehicle is spaced apart from the board by a first set distance). If it is determined that the vehicle is close to the board, step S230 is executed; otherwise, execution of the above step S220 of determining is continued.

At step S230, the processing unit 150 instructs the image unit 140 to enter the second camera 141B into a standby state so as to be ready for obtaining an image of driving-restriction boards. Then step S240 is executed, in which the processing unit 150 determines whether the vehicle has arrived at an image shooting location using information on current location of the vehicle obtained by the satellite signal and the navigation data (e.g., by determining whether the vehicle is spaced apart from the board by a second set distance). If it is determined that the vehicle has arrived at the image shooting location, step S250 is executed, in which the second camera 141B obtains an image of the driving-restriction board and then is deactivated; otherwise, execution of the above step S240 of determining is continued.

After step S250, the method shown in Fig. 2 proceeds with an image enhanced process routine which will be described in detail below. In this routine, it is determined whether the second image obtained by the second camera 141B needs an enhanced process or not. Such en enhanced process is executed when necessary.

After the completion of the image enhanced process routine, step S260 is executed, in which the image processing device 142 will recognize the second image or the second image which has been subject to the enhance process so as to obtain driving-restriction information and provide the driving-restriction information to the processing unit 150. The driving-restriction information is a defined relationship among lane, vehicle type and driving speed restriction and can be stored in the storage 130 in the form of a table so as to be used by the processing unit 150. It should be pointed out that the driving-restriction information in this embodiment is merely illustrative rather than limiting, and can comprise various restrictions on vehicle driving.

Table 1 is an exemplary table showing driving-restriction information.

**Table 1**

| lane | vehicle type | range of speed | |
|---|---|---|---|
| | | upper limit (km/h) | lower limit (km/h) |
| 1 | small passenger car | 100 | 80 |
| 1 | large passenger car | 100 | 80 |
| 1 | truck | 100 | 80 |
| 2 | large passenger car | 80 | 60 |
| 2 | truck | 80 | 60 |
| 3 | truck | 80 | 60 |
| 3 | dangerous vehicle | 60 | 40 |

Then, step S270 is executed, in which the image processing device 142 determines which lane the vehicle currently travels in according to the first image obtained by the first camera 141A and provides the result to the processing unit 150.

Then, step S280 is executed, in which the processing unit 150 determines whether the current vehicle driving state matches with the driving-restriction information obtained by the image processing device 142 at the above step S260; if they match, the method returns to the step S220; otherwise, the method proceeds with the step S290, in which the processing unit 150 generates a message for warning so that the driver is informed of an inappropriate driving state of the vehicle, and the information can be displayed on the display 120 in a visual manner and/or presented in an acoustical signal.

In step S280, the current vehicle driving state comprises the lane the vehicle currently travels in, vehicle type and current driving speed of vehicle, wherein the lane is determined by the image processing device 142 at the above step S270, the vehicle type can be set by the user himself or set by vehicle manufactures before the vehicle leaves the factory, and the current driving speed of vehicle can be obtained from an external sensor.

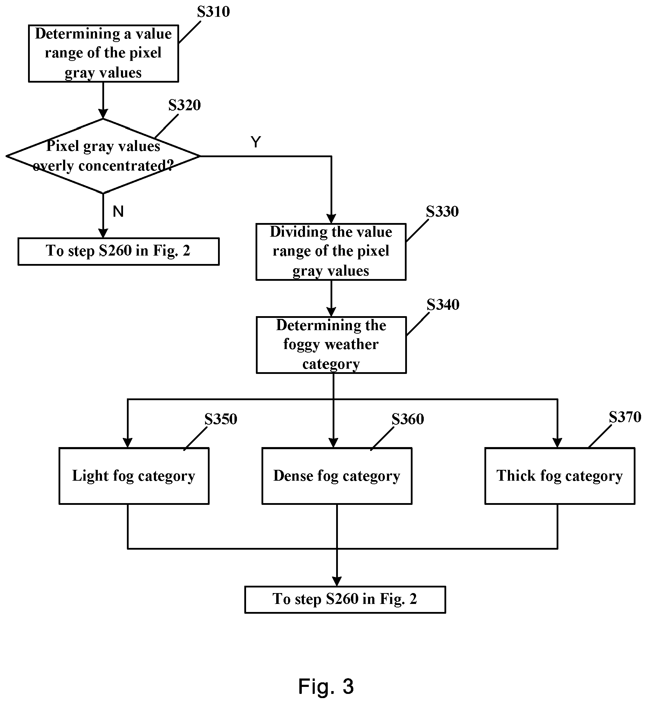

Fig. 3 is a flowchart showing an image enhanced process routine for the method shown in Fig. 2.

As shown in Fig. 3, at step S310, the image processing device 142 determines a value range of the pixel gray values of the second image and thus obtains a distribution of the pixel gray values.

Then, step S320 is executed, in which the image processing device 142 determines whether the pixel gray values are overly concentrated according to the distribution of the pixel gray values obtained (e.g., by determining whether there exists such a pixel gray value window, a proportion of the number of pixels contained in which to the total number of pixels is larger than a preset threshold. If it is determined that the pixel gray values are overly concentrated, step S330 is executed for performing an image enhanced process; otherwise, no image enhanced process is performed and the step S260 in Fig. 2 is executed directly.

At step S330, the image processing device 142 divides the value range of the pixel gray values into a plurality of gray threshold intervals according to a plurality of set gray threshold values, each gray threshold interval corresponding to a foggy weather category. By way of example, the foggy weather category comprises three categories of light fog, dense fog and thick fog.

Then, step S340 is executed, in which the image processing device 142 determines the foggy weather category at the time of obtaining images according to a distribution of pixel gray values in the above plurality of intervals. For example, a foggy weather category corresponding to an interval having a maximum degree of overlap with the above pixel gray value window can be determined as the foggy weather category at the time of obtaining the second image.

Then, steps S350, S360 and S370 are executed in an alternative way according to the foggy weather category determined at step S340. Specifically, for light fog category, step S350 is executed, in which the image processing device 142 uses Frankle-McCann algorithm for enhanced processing of the second image; for dense fog category, step S360 is executed, in which the image processing device 142 uses contrast enhanced algorithm for enhanced processing of the second image; and for thick fog category, step S370 is executed, in which the image processing device 142 performs the enhanced processing in the following manner: firstly, a demeaning and unit variance operation is performed on the second image, then a lateral column vector is demeaned and normalized into a unit variance, and lastly, a denoising operation is performed using sparse coding.

After the completion of executing steps S350, S360 and S370 in an alternative way, the image enhanced process routine shown in Fig. 3 will execute step S260 shown in Fig. 2 .

## Claims

1. A method for monitoring a vehicle driving state comprising the steps of:
a) obtaining a first image for a scene in front of a vehicle (10) so as to recognize which lane the vehicle (10) currently travels in;
b) obtaining (S250) a second image having a driving-restriction board; the driving-restriction board being a board displaying a driving-restriction information;
c) recognizing (S260), from the driving-restriction board, the driving-restriction information for a region where the vehicle (10) is currently in; further **characterized in that** it comprises the steps of:
d1) determining (S280) whether a vehicle driving state defined as a relationship of the recognized lane, the vehicle type and the current driving speed and the driving-restriction information match; and
d2) if it does not match, generating (S290) a message for warning; wherein the driving-restriction information is a defined relationship among lane, vehicle type and driving speed restriction;
e) wherein the first image and the second image are obtained by a first camera (141A) and a second camera (141 B), wherein the first camera (141A) is disposed at a middle position of the head of the vehicle (10), and the second camera (141B) is disposed at a middle position of an upper portion of the front windshield of the vehicle (10); and
f) wherein the step of obtaining (S250) a second image having the driving-restriction board comprises the steps of:
f1) activating the second camera (141 B) when it is determined that the vehicle (10) is spaced apart from the driving-restriction board by a first set distance determined on the basis of a location signal obtained from a satellite and navigation data obtained from a navigation device.;
f2) obtaining the second image when it is determined that the vehicle (10) is spaced apart from the driving-restriction board by a second set distance determined on the basis of a location signal obtained from a satellite and navigation data obtained from a navigation device; and
f3) deactivating the second camera (141 B) when the acquisition of the second image is completed,
f4) wherein the first set distance is larger than the second set distance, and the distance between the vehicle (10) and the driving-restriction board is determined by means of navigation data by a navigation device.

2. The method according to claim 1, wherein the driving-restriction information is recognized in the following manner: if it is determined that it is currently in a foggy weather condition according to the concentration degree of pixel gray value of the second image, performing an enhanced process to the second image; extracting a region corresponding to the driving-restriction board from the second image which has been subject to the enhanced process; and recognizing (S260) the driving-restriction information from the region corresponding to the driving-restriction board.

3. A vehicle navigation device, comprising:
a) a unit (110) for receiving a locating signal, configured to receive the locating signal from one or more satellites, the location signal identifying the current location of the vehicle;
b) a display (120); and
c) a processing unit (150) coupled to the unit (110) for receiving the locating signal and the display (120), configured to process the locating signal and rendering navigation information on the display (120),
d) comprising an image unit (140) coupled to the processing unit (150), the image unit (140) comprising:
e) an image acquisition device (141), configured to obtain a first image for a scene in front of a vehicle (10) and a second image having one or more driving-restriction boards; the driving- restriction boards being boards displaying a driving-restriction information;
f) an image processing device (142), configured to recognize which lane the vehicle (10) currently travels in and to recognize, from the one or more driving restriction boards, the driving-restriction information for a region where the vehicle (10) is currently in,
g) the processing unit (150) further configured to determine whether a vehicle driving state defined as a relationship of the recognized lane, the vehicle type and the current driving speed and the driving-restriction information match, and to generate a message for warning and render the message on the display if it does not match; wherein
h) the driving-restriction information is a defined relationship among lane, vehicle type and driving speed restriction;
i1) wherein the image acquisition device comprises: a first camera (141 A) configured for obtaining the first image, which is disposed at a middle position of the head of the vehicle (10); and
i2) a second camera (141 B) configured for obtaining the second image, which is disposed at a middle position of an upper portion of the front windshield of the vehicle (10); and wherein
j) the second camera (141 B) obtains the second image in the following manner under the control of the processing unit (150):
j1) the processing unit (150) activates the second camera (141 B) when the processing unit (150) determines that the vehicle (10) is spaced apart from the driving-restriction board by a first set distance according to the locating signal;
j2) the second camera (141 B) obtains the second image when the processing unit (150) determines that the vehicle (10) is spaced apart from the driving-restriction board by a second set distance according to the locating signal; and
j3) the processing unit (150) deactivates the second camera (141 B) when the acquisition of the second image is completed,
j4) wherein the first set distance is larger than the second set distance.

4. The vehicle navigation device according to claim 5, wherein a wide angle range and a horizontal shooting angle of the first camera (141 A) is about 140 degrees and - 10 degrees respectively, and a wide angle range and a horizontal shooting angle of the second camera (141 B) is about 140 degrees and +20 degrees respectively.

5. The vehicle navigation device according to claim 5, wherein the image processing device (142) recognizes the driving-restriction information in the following manner:
if it is determined that it is currently in a foggy weather condition according to the concentration degree of pixel gray value of the second image, performing an enhanced process to the second image;
extracting a region corresponding to the driving-restriction board from the second image which has been subject to the enhanced process; and
recognizing the driving-restriction information from the region corresponding to the driving- restriction board.

## Patentansprüche

1. Verfahren zur Überwachung eines Fahrzeugantriebszustands, das folgende Schritte umfasst:
a) Erhalten eines ersten Bildes für eine Szene vor einem Fahrzeug (10), um zu erkennen, auf welcher Fahrbahn das Fahrzeug (10) momentan fährt;
b) Erhalten (S250) eines zweiten Bildes, das eine Fahrtbeschränkungstafel aufweist, wobei die Fahrtbeschränkungstafel eine Tafel ist, die eine Fahrtbeschränkungsinformation anzeigt;
c) Erkennen (S260), anhand der Fahrtbeschränkungstafel, der Fahrtbeschränkungsinformation für eine Region, in der sich das Fahrzeug (10) gerade befindet;
des Weiteren **dadurch gekennzeichnet, dass** es folgende Schritte umfasst:
d1) Bestimmen (S280), ob ein Fahrzeugantriebszustand, der als eine Beziehung der erkannten Fahrbahn, des Fahrzeugtyps und der momentanen Fahrgeschwindigkeit definiert ist, und die Fahrtbeschränkungsinformation übereinstimmen; und
d2) wenn sie nicht übereinstimmen, Generieren (5290) einer Warnmeldung, wobei die Fahrtbeschränkungsinformation eine definierte Beziehung zwischen Fahrbahn, Fahrzeugtyp und Fahrgeschwindigkeitsbeschränkung ist;
e) wobei das erste Bild und das zweite Bild durch eine erste Kamera (141A) und eine zweite Kamera (141B) erhalten werden, wobei die erste Kamera (141A) in der Mitte der Front des Fahrzeugs (10) angeordnet ist und die zweite Kamera (141B) in der Mitte eines oberen Abschnitts der Frontscheibe des Fahrzeugs (10) angeordnet ist; und
f) wobei der Schritt zum Erhalten (S250) eines zweiten Bildes, das die Fahrtbeschränkungstafel aufweist, folgende Schritte umfasst:
f1) Aktivieren der zweiten Kamera (141B), wenn bestimmt wird, dass das Fahrzeug (10) von der Fahrtbeschränkungstafel um eine erste eingestellte Distanz beabstandet ist, die auf der Basis eines Positionssignals, das von einem Satelliten erhalten wird, und von Navigationsdaten, die von einem Navigationsgerät erhalten werden, bestimmt wird;
f2) Erhalten des zweiten Bildes, wenn bestimmt wird, dass das Fahrzeug (10) von der Fahrtbeschränkungstafel um eine zweite eingestellte Distanz beabstandet ist, die auf der Basis eines Positionssignals, das von einem Satelliten erhalten wird, und von Navigationsdaten, die von einem Navigationsgerät erhalten werden, bestimmt wird; und
f3) Deaktivieren der zweiten Kamera (141B), wenn die Aufnahme des zweiten Bildes vollendet ist,
f4) wobei die erste eingestellte Distanz größer ist als die zweite eingestellte Distanz, und die Distanz zwischen dem Fahrzeug (10) und der Fahrtbeschränkungstafel unter Verwendung von Navigationsdaten durch ein Navigationsgerät bestimmt wird.

2. Verfahren nach Anspruch 1, wobei die Fahrtbeschränkungsinformation in der folgenden Weise erkannt wird: wenn anhand des Konzentrationsgrades von Pixelgrauwerten in dem zweiten Bild bestimmt wird, dass momentan neblige Witterungsbedingungen herrschen, Ausführen eines Bildoptimierungsprozesses an dem zweiten Bild; Extrahieren einer Region, die der Fahrtbeschränkungstafel entspricht, aus dem zweiten Bild, das dem Bildoptimierungsprozess unterzogen wurde; und Erkennen (S260) der Fahrtbeschränkungsinformation aus der Region, die der Fahrtbeschränkungstafel entspricht.

3. Fahrzeugnavigationsgerät, das Folgendes umfasst:
a) eine Einheit (110) zum Empfangen eines Positionsbestimmungssignals, die dafür ausgebildet ist, das Positionsbestimmungssignal von einem oder mehreren Satelliten zu empfangen, wobei das Positionssignal die momentane Position des Fahrzeugs identifiziert;
b) eine Anzeigevorrichtung (120); und
c) eine Verarbeitungseinheit (150), die mit der Einheit (110) zum Empfangen des Positionsbestimmungssignals und der Anzeigevorrichtung (120) gekoppelt ist und dafür ausgebildet ist, das Positionsbestimmungssignal zu verarbeiten und Navigationsinformationen auf der Anzeigevorrichtung (120) darzustellen,
d) und eine Bildeinheit (140) umfasst, die mit der Verarbeitungseinheit (150) gekoppelt ist, wobei die Bildeinheit (140) Folgendes umfasst:
e) eine Bildaufnahmevorrichtung (141), die dafür ausgebildet ist, ein erstes Bild für eine Szene vor einem Fahrzeug (10) und ein zweites Bild, das eine oder mehrere Fahrtbeschränkungstafeln aufweist, zu erhalten, wobei die Fahrtbeschränkungstafeln Tafeln sind, die eine Fahrtbeschränkungsinformation anzeigen;
f) eine Bildverarbeitungsvorrichtung (142), die dafür ausgebildet ist zu erkennen, auf welcher Fahrbahn das Fahrzeug (10) momentan fährt, und anhand der einen oder der mehreren Fahrtbeschränkungstafeln die Fahrtbeschränkungsinformation für eine Region zu erkennen, in der sich das Fahrzeug (10) momentan befindet,
g) wobei die Verarbeitungseinheit (150) des Weiteren dafür ausgebildet ist zu bestimmen, ob ein Fahrzeugantriebszustand, der als eine Beziehung der erkannten Fahrbahn, des Fahrzeugtyps und der momentanen Fahrgeschwindigkeit definiert ist, und die Fahrtbeschränkungsinformation übereinstimmen, und eine Warnmeldung zu generieren und die Nachricht auf der Anzeigevorrichtung wiederzugeben, wenn sie nicht übereinstimmen; wobei
h) die Fahrtbeschränkungsinformation eine definierte Beziehung zwischen Fahrbahn, Fahrzeugtyp und Fahrgeschwindigkeitsbeschränkung ist;
i1) wobei die Bildaufnahmevorrichtung Folgendes umfasst: eine erste Kamera (141A), die dafür ausgebildet ist, das erste Bild zu erhalten und die in der Mitte der Front des Fahrzeugs (10) angeordnet ist; und
i2) eine zweite Kamera (141B), die dafür ausgebildet ist, das zweite Bild zu erhalten und die in der Mitte eines oberen Abschnitts der Frontscheibe des Fahrzeugs (10) angeordnet ist; und wobei
j) die zweite Kamera (141B) das zweite Bild in der folgenden Weise unter der Steuerung der Verarbeitungseinheit (150) erhält:
j1) die Verarbeitungseinheit (150) aktiviert die zweite Kamera (141B), wenn die Verarbeitungseinheit (150) anhand des Positionsbestimmungssignals bestimmt, dass das Fahrzeug (10) von der Fahrtbeschränkungstafel um eine erste eingestellte Distanz beabstandet ist;
j2) die zweite Kamera (141B) nimmt das zweite Bild auf, wenn die Verarbeitungseinheit (150) anhand des Positionsbestimmungssignals bestimmt, dass das Fahrzeug (10) von der Fahrtbeschränkungstafel um eine zweite eingestellte Distanz beabstandet ist; und
j3) die Verarbeitungseinheit (150) deaktiviert die zweite Kamera (141B), wenn die Aufnahme des zweiten Bildes vollendet ist,
j4) wobei die erste eingestellte Distanz größer ist als die zweite eingestellte Distanz.

4. Fahrzeugsnavigationsgerät nach Anspruch 5, wobei ein Weitwinkelbereich und ein horizontaler Aufnahmewinkel der ersten Kamera (141A) etwa 140 Grad bzw. 10 Grad betragen und ein Weitwinkelbereich und ein horizontaler Aufnahmewinkel der zweiten Kamera (141B) etwa 140 Grad bzw. +20 Grad betragen.

5. Fahrzeugsnavigationsgerät nach Anspruch 5, wobei die Bildverarbeitungsvorrichtung (142) die Fahrtbeschränkungsinformation in der folgenden Weise erkennt:
wenn anhand des Konzentrationsgrades von Pixelgrauwerten in dem zweiten Bild bestimmt wird, dass momentan neblige Witterungsbedingungen herrschen, Ausführen eines Bildoptimierungsprozesses an dem zweiten Bild;
Extrahieren einer Region, die der Fahrtbeschränkungstafel entspricht, aus dem zweiten Bild, das dem Bildoptimierungsprozess unterzogen wurde; und
Erkennen der Fahrtbeschränkungsinformation aus der Region, die der Fahrtbeschränkungstafel entspricht.

## Revendications

1. Procédé pour surveiller un état de conduite de véhicule comprenant les étapes consistant à :
a) obtenir une première image de scène à l'avant d'un véhicule (10), de manière à reconnaître la voie dans laquelle le véhicule (10) circule actuellement ;
b) obtenir (S250) une seconde image comportant un panneau de restriction concernant la conduite ; le panneau de restriction concernant la conduite étant un panneau affichant des informations de restriction concernant la conduite ;
c) reconnaître (S260), d'après le panneau de restriction concernant la conduite, les informations de restriction concernant la conduite, destinées à une région où le véhicule (10) circule actuellement ;
**caractérisé en outre en ce qu'**il comprend les étapes consistant à :
d1) déterminer (S280) si un état de conduite de véhicule, défini comme une relation de la voie reconnue, du type de véhicule et de la vitesse de conduite actuelle, et les informations de restriction concernant la conduite concordent ; et
d2) s'ils ne concordent pas, produire (S290) un message d'avertissement ; dans lequel les informations de restriction concernant la conduite consistent en une relation définie entre la voie, le type de véhicule et la restriction de vitesse de conduite ;
e) dans lequel la première image et la seconde image sont obtenues par un premier appareil de prise de vues (141A) et un second appareil de prise de vues (141B), dans lequel le premier appareil de prise de vues (141A) est disposé à une position médiane de l'avant du véhicule (10), et le second appareil de prise de vues (141B) est disposé à une position médiane d'une partie supérieure du pare-brise avant du véhicule (10) ; et
f) dans lequel l'étape d'obtention (S250) d'une seconde image comportant le panneau de restriction concernant la conduite comprend les étapes consistant à :
f1) activer le second appareil de prise de vues (141B) lorsqu'il est déterminé que le véhicule (10) est espacé du panneau de restriction concernant la conduite par une première distance définie, déterminée sur la base d'un signal de localisation obtenu à partir d'un satellite et de données de navigation obtenues à partir d'un dispositif de navigation ;
f2) obtenir la seconde image lorsqu'il est déterminé que le véhicule (10) est espacé du panneau de restriction concernant la conduite par une seconde distance définie, déterminée sur la base d'un signal de localisation obtenu à partir d'un satellite et de données de navigation obtenues à partir d'un dispositif de navigation ; et
f3) désactiver le second appareil de prise de vues (141B) lorsque l'acquisition de la seconde image est achevée,
f4) dans lequel la première distance définie est supérieure à la seconde distance définie, et la distance entre le véhicule (10) et le panneau de restriction concernant la conduite est déterminée au moyen de données de navigation par un dispositif de navigation.

2. Procédé selon la revendication 1, dans lequel les informations de restriction concernant la conduite sont reconnues de la manière suivante : s'il est déterminé qu'il règne actuellement un temps de brouillard, en fonction de la valeur de degré de concentration de pixels gris de la seconde image, exécuter un processus amélioré sur la seconde image ;
extraire une région correspondant au panneau de restriction concernant la conduite, de la seconde image qui a fait l'objet du processus amélioré ; et
reconnaître (S260) les informations de restriction concernant la conduite à partir de la région correspondant au panneau de restriction concernant la conduite.

3. Dispositif de navigation pour véhicule, comprenant :
a) une unité (110) destinée à recevoir un signal de localisation, conçue pour recevoir le signal de localisation en provenance d'un ou de plusieurs satellite(s), le signal de localisation identifiant la localisation actuelle du véhicule ;
b) un dispositif d'affichage (120) ; et
c) une unité de traitement (150) couplée à l'unité (110) destinée à recevoir le signal de localisation et au dispositif d'affichage (120), conçue pour traiter le signal de localisation et présenter des informations de navigation sur le dispositif d'affichage (120),
d) comprenant une unité d'imagerie (140) couplée à l'unité de traitement (150), l'unité d'imagerie (140) comprenant :
e) un dispositif d'acquisition d'images (141), conçu pour obtenir une première image d'une scène à l'avant d'un véhicule (10) et une seconde image comportant un ou plusieurs panneau(x) de restriction concernant la conduite ; les panneaux de restriction concernant la conduite étant des panneaux affichant des informations de restriction concernant la conduite ;
f) un dispositif de traitement d'images (142), conçu pour reconnaître la voie dans laquelle le véhicule (10) circule actuellement et pour reconnaître, d'après le(s) panneau(x) de restriction concernant la conduite, les informations de restriction concernant la conduite, destinées à une région où le véhicule (10) circule actuellement,
g) l'unité de traitement (150) étant conçue en outre pour déterminer si un état de conduite de véhicule, défini comme une relation de la voie reconnue, du type de véhicule et de la vitesse de conduite actuelle, et les informations de restriction concernant la conduite concordent, et pour produire un message d'avertissement et présenter le message sur le dispositif d'affichage, s'ils ne concordent pas ; dans lequel :
h) les informations de restriction concernant la conduite consistent en une relation définie entre la voie, le type de véhicule et la restriction de vitesse de conduite ;
i1) dans lequel le dispositif d'acquisition d'images comprend : un premier appareil de prise de vues (141A), conçu pour obtenir la première image, qui est disposé à une position médiane de l'avant du véhicule (10) ; et
i2) un second appareil de prise de vues (141B), conçu pour obtenir la seconde image, qui est disposé à une position médiane d'une partie supérieure du pare-brise avant du véhicule (10) ; et dans lequel :
j) le second appareil de prise de vues (141B) obtient la seconde image de la manière suivante, sous le contrôle de l'unité de traitement (150) :
j1) l'unité de traitement (150) active le second appareil de prise de vues (141B) lorsque l'unité de traitement (150) détermine que le véhicule (10) est espacé du panneau de restriction concernant la conduite par une première distance définie, en fonction du signal de localisation ;
j2) le second appareil de prise de vues (141B) obtient la seconde image lorsque l'unité de traitement (150) détermine que le véhicule (10) est espacé du panneau de restriction concernant la conduite par une seconde distance définie, en fonction du signal de localisation ; et
j3) l'unité de traitement (150) désactive le second appareil de prise de vues (141B) lorsque l'acquisition de la seconde image est achevée,
j4) dans lequel la première distance définie est supérieure à la seconde distance définie.

4. Dispositif de navigation pour véhicule selon la revendication 5, dans lequel un champ grand-angle et un angle de prise de vue horizontal du premier appareil de prise de vues (141A) sont d'environ 140 degrés et -10 degrés respectivement, et un champ grand-angle et un angle de prise de vue horizontal du second appareil de prise de vues (141B) sont d'environ 140 degrés et +20 degrés respectivement.

5. Dispositif de navigation pour véhicule selon la revendication 5, dans lequel le dispositif de traitement d'images (142) reconnaît les informations de restriction concernant la conduite de la manière suivante : s'il est déterminé qu'il règne actuellement un temps de brouillard, en fonction de la valeur de degré de concentration de pixels gris de la seconde image, exécuter un processus amélioré sur la seconde image ;
extraire une région correspondant au panneau de restriction concernant la conduite, de la seconde image qui a fait l'objet du processus amélioré ; et
reconnaître les informations de restriction concernant la conduite à partir de la région correspondant au panneau de restriction concernant la conduite.
